# EUROPÄISCHE PATENTSCHRIFT

(11) **EP 1 273 694 B1**
(45) Veröffentlichungstag und Bekanntmachung des Hinweises auf die Patenterteilung: **20.07.2005**
(21) Anmeldenummer: 02022523.1
(22) Anmeldetag: 16.06.1998
(51) Int. Cl.: C09B 62/513, D06P 1/384, C09B 62/51, C07C 309/11

(54) **Reaktivfarbstoffe**
Reactive dyes
Colorants réactifs

(30) Priorität: 24.06.1997 CH 152997; 27.10.1997 CH 248697
(43) Veröffentlichungstag der Anmeldung: 08.01.2003
(62) Teilanmeldung aus: 98810547.4
(73) Patentinhaber: Ciba Specialty Chemicals Holding Inc., 4057 Basel (CH)
(72) Erfinder: Ruhlmann, Edmond, 68300 Saint-Louis (FR); Tzikas, Athanassios, 4133 Pratteln (CH); Klier, Herbert, 79588 Efringen-Kirchen (DE)

(56) Entgegenhaltungen:
- EP-A- 0 292 825
- DE-A- 2 110 230
- DE-A- 2 219 217

## Beschreibung

Die vorliegende Erfindung betrifft neue Reaktivfarbstoffe.

Die Praxis des Färbens und Bedruckens mit Reaktivfarbstoffen hat in neuerer Zeit zu erhöhten Anforderungen an die Qualität der Färbungen und Drucke und die Wirtschaftlichkeit des Färbe- bzw. Druckprozesses geführt. Infolge dessen besteht weiterhin ein Bedarf nach neuen Reaktivfarbstoffen, welche verbesserte Eigenschaften hinsichtlich Applikation sowie der erhaltenen Färbungen bzw. Drucke aufweisen.

Für das Färben bzw. Bedrucken werden heute Reaktivfarbstoffe gefordert, die eine ausreichende Substantivität haben und zugleich eine gute Auswaschbarkeit der nicht fixierten Anteile aufweisen. Die Färbungen und Drucke sollten ferner eine gute färberische Ausbeute und hohe Fixiergrade aufweisen. Von den bekannten Reaktivfarbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Reaktivfarbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen und Drucke mit guten Allgemeinechtheiten, beispielsweise Licht- und Nassechtheiten, ergeben.

In der EP-A-0 292 825 werden reaktive Trisazofarbstoffe mit einer H-Säure-Kupplungskomponente beschrieben, deren Azobenzol-Diazokomponente durch Sulfo substituiert ist.

Es hat sich gezeigt, dass mit den weiter unten definierten Reaktivfarbstoffen die gestellte Aufgabe weitgehend gelöst wird.

Gegenstand der vorliegenden Erfindung sind Reaktivfarbstoffe der Formel 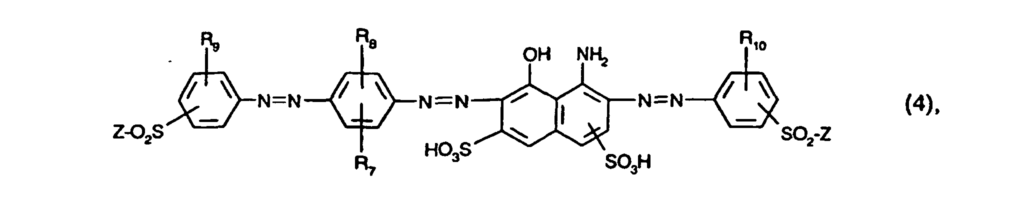 worin
R₇, R₉ und R₁₀ unabhängig voneinander Wasserstoff, C₁-C₄-Alkyl, C₁-C₄-Alkoxy oder Halogen bedeuten,
R₈ durch Hydroxy substituiertes C₁-C₄-Alkoxy und
Z Vinyl, β-Sulfatoäthyl, β-Chloräthyl oder β-Acetoxyäthyl ist.
R₇, R₉ und R₁₀ bedeuten unabhängig voneinander Wasserstoff, C₁-C₄-Alkyl, wie z.B. Methyl, Aethyl, n-Propyl, Isopropyl, C₁-C₄-Alkoxy, wie z.B. Methoxy, Aethoxy, Isopropoxy, oder Halogen, wie z.B. Fluor, Brom oder insbesondere Chlor. Vorzugsweise bedeutet R₇ C₁-C₄-Alkyl, insbesondere Methyl. Vorzugsweise bedeuten R₉ und R₁₀ je Wasserstoff.

Bevorzugt sind ferner die erfindungsgemässen Farbstoffe der Formel 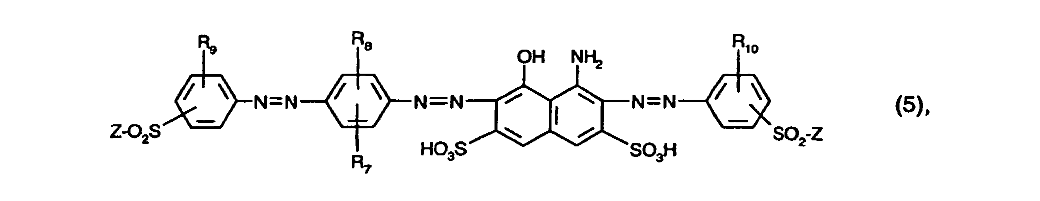 worin R₇, R₈, R₉, R₁₀ und Z die unter Formel (4) angegebenen Bedeutungen und Bevorzugungen haben.

Besonders bevorzugt sind die erfindungsgemässen Farbstoffe der Formel 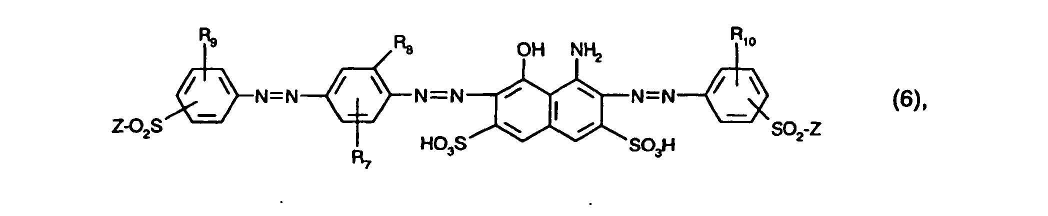 worin R₇, R₈, R₉, R₁₀ und Z die unter Formel (4) angegebenen Bedeutungen und Bevorzugungen haben.

Ganz besonders bevorzugt sind Farbstoffe der Formel (4), (5) und (6), worin R₉ und R₁₀ Wasserstoff sind.

Wichtig sind die Farbstoffe der Formel 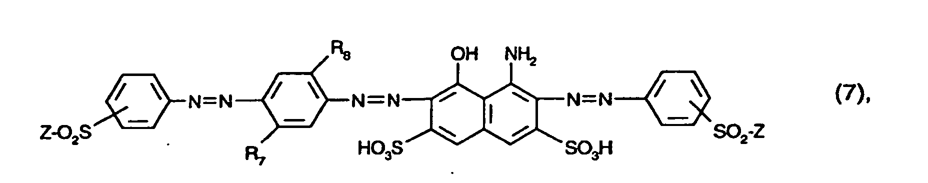 worin R₇ C₁-C₄-Alkyl, insbesondere Methyl, R₈ durch Hydroxy substituiertes C₁-C₄-Alkoxyund Z Vinyl, β-Chloräthyl oder β-Sulfatoäthyl ist.

Gegenstand der Erfindung ist ferner ein Verfahren zur Herstellung der Farbstoffe der Formel (4), welches dadurch gekennzeichnet ist, dass man zuerst eine Verbindung der Formel 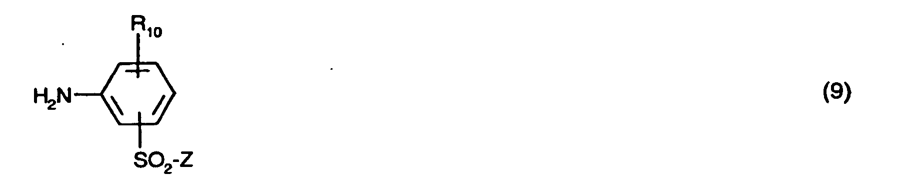 diazotiert und sauer auf eine Verbindung der Formel 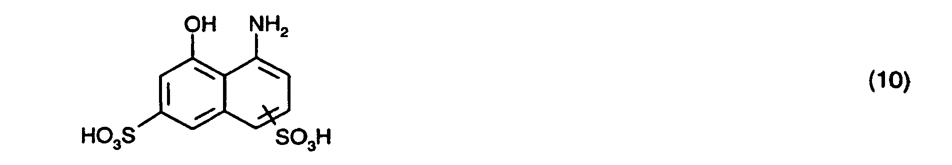 kuppelt, und anschliessend eine Verbindung der Formel 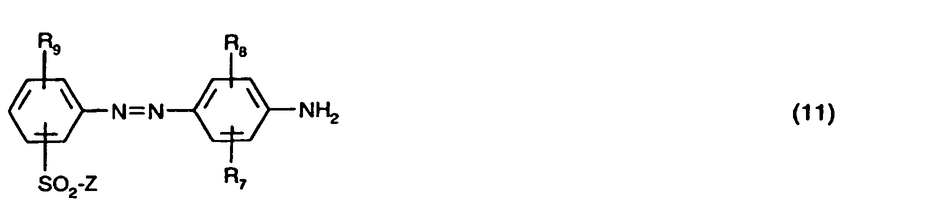 diazotiert und in alkalischem Medium auf die vorher gebildete Monoazoverbindung kuppelt, wobei R₇, R₈, R₉, R₁₀ und Z die unter Formel (4) angegebenen Bedeutungen haben.

Die Verbindungen der Formeln (9), (10) und (11) sind an sich bekannt oder können in Analogie zu bekannten Verbindungen hergestellt werden.

Die Verbindung der Formel (11) wird erhalten, indem man eine Verbindung der Formel 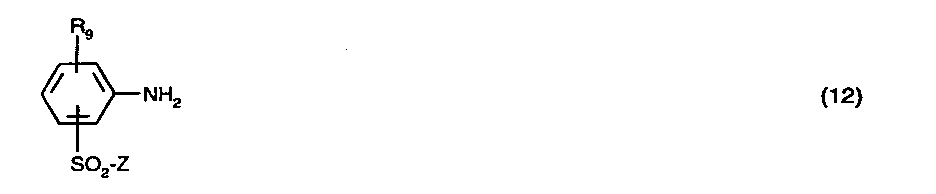 diazotiert und auf eine Verbindung der Formel 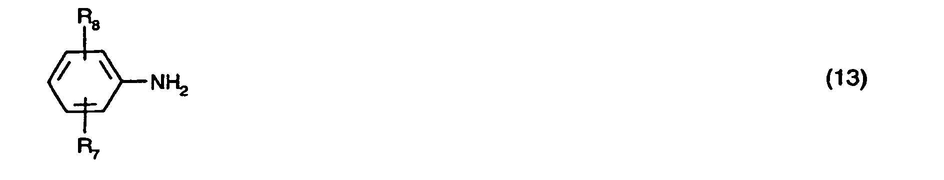 kuppelt, wobei R₇, R₈, R₉ und Z in den Formeln (12) und (13) die unter Formel (4) angegebenen Bedeutungen haben.

Ein Beispiel für Verbindungen der Formeln (9) und (12) ist 4-(β-Sulfatoäthylsulfonyl)-anilin. Beispiele für Verbindungen der Formel (10) sind H-Säure und K-Säure.

Ein Beispiel für Verbindungen der Formel (13) ist 2-(β-Hydroxyäthoxy)-5-methylanilin.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Reaktivfarbstoffe der Formel (4) können auch in Mischungen untereinander oder in Mischungen mit anderen Reaktivfarbstoffen oder nicht-reaktiven Farbstoffen, z.B. Säurefarbstoffen oder Dispersionsfarbstoffen, zum Färben oder Bedrucken der genannten Fasermaterialien verwendet werden.

Gegenstand der Erfindung sind ferner die Zwischenprodukte der Formel (11), worin R₇, R₈, R₉ und Z die unter Formel (4) angegebenen Bedeutungen und Bevorzugungen haben.

Bevorzugt sind Zwischenprodukte der Formel 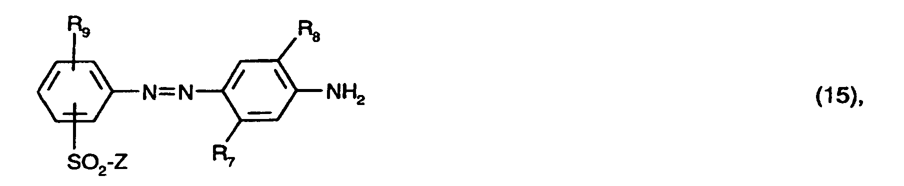 worin R₇, R₈, R₉ und Z die angegebenen Bedeutungen und Bevorzugungen haben. Insbesondere bedeutet R₉ in Formel (15) Wasserstoff. Vorzugsweise ist der Rest -SO₂-Z in para-Stellung zur Azogruppe gebunden.

In den erfindungsgemässen Reaktivfarbstoffen der Formel (4) vorhandene Sulfogruppen können generell sowohl als freie Säure (-SO₃H) als auch in einer beliebigen Salzform, z.B. als Alkali-, Erdalkali- oder Ammoniumsalz oder als Salz eines organischen Amins wie etwa dem Natrium-, Kalium-, Lithium- oder Ammoniumsalz, dem Salz des Triethanolamins oder dem Mischsalz zweier oder mehrerer verschiedener Kationen, z.B. als Na/Li-, Na/NH₄- oder Na/Li/NH₄-Mischsalz, vorliegen.

Die Reaktivfarbstoffe der Formel (4) eignen sich zum Färben und Bedrucken der verschiedensten Materialien, wie Seide, Leder, Wolle, Polyamidfasem und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose, z.B. Viscose, ferner Modalfasern und deren Mischungen mit Baumwolle. Die Reaktivfarbstoffe der Formel (4) sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Reaktivfarbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren.

Die Reaktivfarbstoffe der Formel (4) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fxiergrad bemerkenswert klein, d.h. der Seifverlust sehr gering ist. Die Reaktivfarbstoffe der Formel (4) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Reaktivfarbstoffen der Formel (4) hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Erläuterungsbeispiel 1:

Herstellung des 1. Teilchromophors: 588,5 Teile Schwefelsäure (100%) werden vorgelegt und 167,2 Teile 2-(β-Hydroxyäthoxy)-5-methylanilin so zugegeben, dass die Temperatur 30°C nicht übersteigt. Anschliessend wird bei 30°C während 4 Stunden nachgerührt und dann langsam auf eine Eis/Wasser-Mischung ausgetragen. Man erhält eine Verbindung, die in Form der freien Säure der Formel (100) entspricht 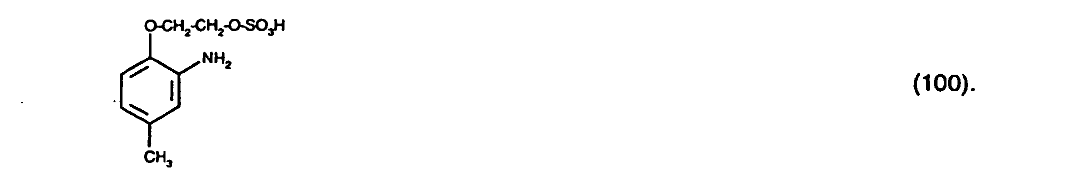 120 Teile 4-(β-Sulfatoäthylsulfonyl)-anilin werden in 225 Teilen Wasser angeschlämmt, mit 52,5 Teilen 30%-iger NaOH-Lösung gelöst, in 450 Teile Eis eingetragen und mit 103 Teilen 32%-iger Salzsäure versetzt. Anschliessend werden 104 Teile Natriumnitritlösung (4N) innerhalb von 30 Minuten bei 0 bis 5°C zugetropft und 15 Minuten gerührt. Die erhaltene Diazosuspension wird wie folgt auf die Verbindung der Formel (100) gekuppelt:
99,0 Teile der Verbindung der Formel (100) werden mit 500 Teilen Wasser angeschlämmt und mit 30%-iger NaOH-Lösung auf pH-Wert 5 gestellt, wobei die Temperatur auf 0 bis 5°C gehalten wird. Die Diazosuspension wird zugegeben und der pH mit NaOH (2N) auf den Wert 5 gestellt. Man erhält in guter Ausbeute den Farbstoff der in Form der freien Säure der Formel 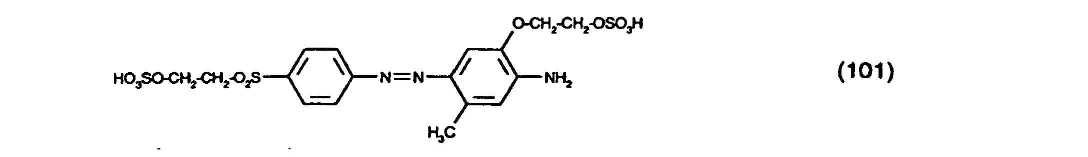 entspricht. Der Farbstoff der Formel (101) kann als Kaliumsalz abgeschieden werden.

Herstellung des 2. Teilchromophors: 15 Teile 4-(β-Sulfatoäthylsulfonyl)-anilin werden in 75 Teilen Wasser angeschlämmt, mit 6,7 Teilen 30%-iger NaOH-Lösung gelöst, in 30 Teile Eis eingetragen und mit 14 Teilen 32%-iger Salzsäure versetzt. Anschliessend werden 13,2 Teile Natriumnitritlösung (4N) innerhalb von 45 Minuten bei 10°C zugetropft und 15 Minuten gerührt. Die erhaltene Diazosuspension wird wie folgt auf H-Säure gekuppelt:
16,0 Teile H-Säure werden in 55 Teilen Wasser angeschlämmt und innerhalb von 10 Minuten zu der Diazosuspension zulaufen gelassen. Bei 10 bis 15°C wird während 3 Stunden weitergerührt. Man erhält die Monoazosuspension des Farbstoffes, der in Form der freien Säure der Formel (102) entspricht

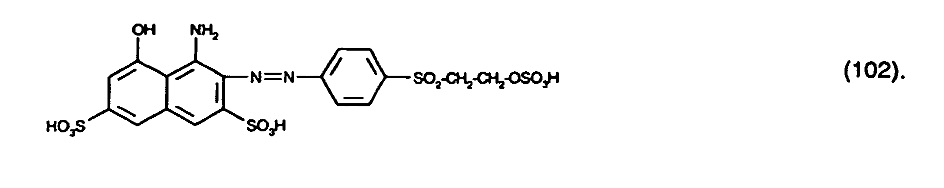

Herstellung des Farbstoffes der Formel 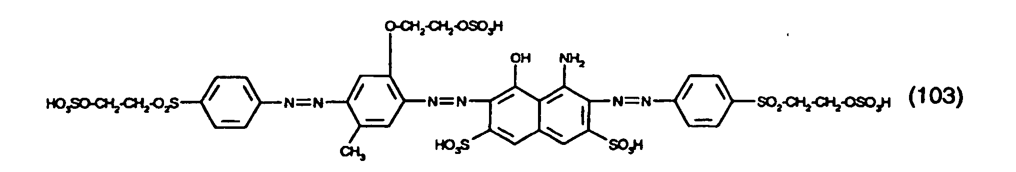 aus den beiden Teilchromophoren (101) und (102):
28,3 Teile der Verbindung der Formel (101) werden in 200 Teilen Wasser angeschlämmt und mit 11 Teilen 32%-iger Salzsäure versetzt und auf 30°C erwärmt. Anschliessend werden 13,2 Teile Natriumnitritlösung (4N) innerhalb von 45 Minuten bei 30°C zudosiert. Zu dieser Diazosuspension lässt man die erhaltene Monoazosuspension des Farbstoffes der Formel (102) zulaufen, wobei der pH mit NaOH (2N) auf 7,5 gestellt wird. Man lässt noch einige Stunden nachrühren. Anschliessend wird das Produkt mittels Umkehrosmose entsalzt und gefriergetrocknet. Man erhält den Farbstoff der in Form der freien Säure der Formel (103) entspricht und der Baumwolle in olivgrünen Farbtönen färbt.

### Erläuterungsbeispiel 2:

Herstellung des 1. Teilchromophors: 41 Teile 2-Sulfo-4-(β-Sulfatoäthylsulfonyl)anilin werden in 80 Teilen Wasser und 50 Teilen Eis angeschlämmt, und es werden bei einer Temperatur von ca. 15°C 25 Teile 32%-iger Salzsäure zulaufen gelassen. Anschliessend werden 29 Teile einer 28%-igen Natriumnitritlösung innerhalb von 40 Minuten bei ca. 25°C zugetropft und die Reaktionsmischung wird nachgerührt.

Die erhaltene Diazosuspension wird wie folgt auf 3-Amino-4-methoxytoluol gekuppelt: 15 Teile 3-Amino-4-methoxytoluol werden mit 100 Teilen Wasser angeschlämmt und die Mischung wird auf einen pH-Wert von 4 gestellt.
Die wie oben angegeben erhältliche Diazosuspension wird zugegeben und der pH mit NaOH (2N) auf den Wert 4 gestellt. Man erhält den Farbstoff der in Form der freien Säure der Formel 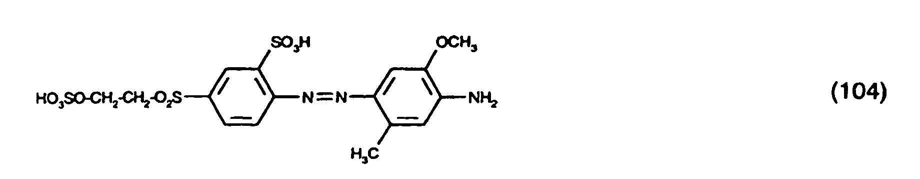 entspricht. Der Farbstoff der Formel (104) kann als Kaliumsalz abgeschieden werden.

Herstellung des 2. Teilchromophors: Die Herstellung des Farbstoffs der Formel (102) kann wie in Beispiel 1 angegeben erfolgen.

Herstellung des Farbstoffes der Formel

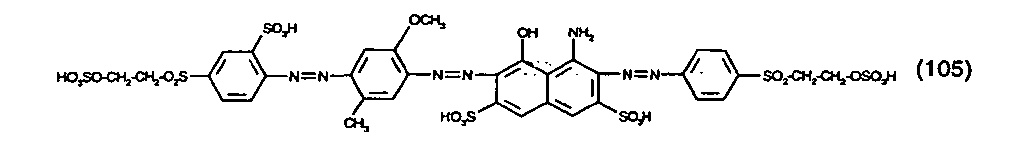

26 Teile der Verbindung der Formel (104) werden in 300 Teilen Wasser angeschlämmt und es werden bei einer Temperatur von 20°C 13 Teile einer 28%-igen Natriumnitritlösung zudosiert und innerhalb von einer Stunde 10 Teile 32%-iger Salzsäure zulaufen gelassen. Anschliessend wird nachgerührt.

Die Temperatur der Monoazosuspension des Farbstoffes der Formel (102) wird durch Zugabe von Eis auf 0°C eingestellt und der pH durch Zugabe einer Dinatriumhydrogenphosphatlösung und NaOH (30%) auf einen Wert von 7,5 gestellt. Man lässt innerhalb von einer Stunde die wie oben angegeben erhaltene Diazosuspension unter Konstanthaltung des angegebenen pH-Wertes zulaufen und rührt noch einige Stunden bei pH 7,5 nach. Anschliessend wird das Produkt mittels Umkehrosmose entsalzt und gefriergetrocknet. Man erhält den Farbstoff der in Form der freien Säure der Formel (105) entspricht und der Baumwolle in olivgrünen Farbtönen färbt.

### Färbevorschrift I

2 Teile des gemäss Erläuterungsbeispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxid und 20 g kalziniertes Soda enthält, zugegeben. Danach wird die gefärbte Ware gespült, während einer Viertelstunde mit einem nichtionogenen Waschmittel kochend geseift, nochmals gespült und getrocknet.

### Färbevorschrift II

1 Teil des gemäss Erläuterungsbeispiel 2 erhaltenen Reaktivfarbstoffes wird in 400 Teilen Wasser gelöst; dazu gibt man 600 Teile einer Lösung, die pro Liter 30 g Natriumchlorid enthält. In dieses Färbebad geht man bei 60°C mit 100 Teilen Baumwollgewebe ein. Nach 45 Minuten werden 10 g pro Liter kalziniertes Soda zugegeben. Es wird weitere 45 Minute bei 60°C gefärbt und danach die gefärbte Ware gespült, während einer Viertelstunde mit einem nichtionogenen Waschmittel kochend geseift, nochmals gespült und getrocknet.

### Färbevorschrift III

5 Teile des gemäss Erläuterungsbeispiel 2 erhaltenen Reaktivfarbstoffes werden in 50 Teilen Wasser gelöst. Dazu gibt man 50 Teile einer Lösung, die pro Liter 15 ml Natriumhydroxyd (36°bé) und 70 ml Wasserglas (38°bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift IV

5 Teile des gemäss Erläuterungsbeispiel 2 erhaltenen Reaktivfarbstoffes werden unter Zusatz von 0,1 Teilen m-nitrobenzolsulfonsaurem Natrium, 6 Teilen Natriumchlorid und einem Teil Soda in 100 Teilen Wasser gelöst. Mit der erhaltenen Lösung wird ein Baumwollgewebe imprägniert, so dass es um 75% seines Gewichts zunimmt. Dann dämpft man die Färbung während 90 Sekunden bei 100 bis 102°C, spült, seift während einer Viertelstunde in einer 0,3%igen kochenden Lösung eines nichtionogenen Waschmittels, spült und trocknet.

### Färbevorschrift V

5 Teile des gemäss Erläuterungsbeispiel 2 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 25°C warmen Lösung, die pro Liter 15 ml Natriumhydroxyd (36°bé) und 250 g Natriumchlorid enthält, quetscht auf 75% Gewichtszunahme ab, dämpft die Färbung während 60 Sekunden bei 100 bis 102°C, spült, seift während einer Viertelstunde in einer 0,3%igen kochenden Lösung eines nichtionogenen Waschmittels, spült und trocknet.

### Druckvorschrift

3 Teile des gemäss Erläuterungsbeispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel 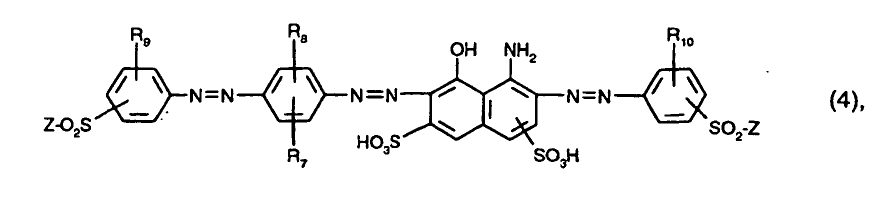 worin
R₇, R₉ und R₁₀ unabhängig voneinander Wasserstoff, C₁-C₄-Alkyl, C₁-C₄-Alkoxy oder Halogen bedeuten,
R₈ durch Hydroxy substituiertes C₁-C₄-Alkoxy und
Z Vinyl, β-Sulfatoäthyl, β-Chloräthyl oder β-Acetoxyäthyl ist.

2. Reaktivfarbstoffe gemäss Anspruch 1 der Formel 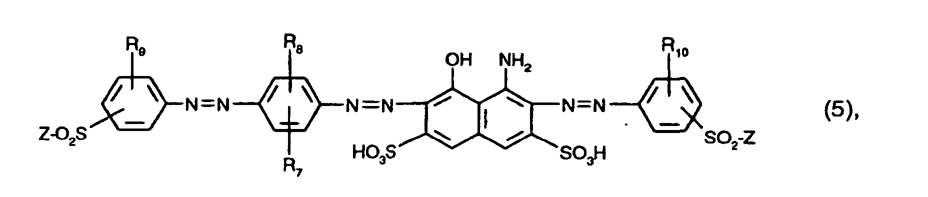 worin
R₇, R₈, R₉, R₁₀ und Z die in Anspruch 1 angegebenen Bedeutungen haben.

3. Reaktivfarbstoffe gemäss einem der Ansprüche 1 und 2 der Formel 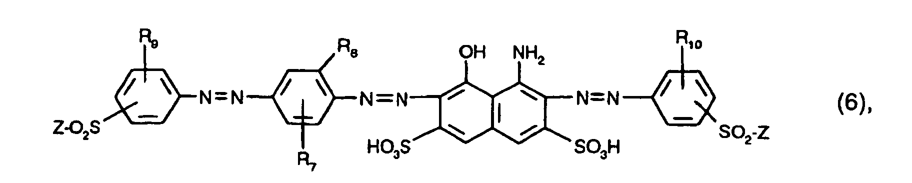 worin
R₇, R₈, R₉, R₁₀ und Z die in Anspruch 1 angegebenen Bedeutungen haben.

4. Reaktivfarbstoffe gemäss einem der Ansprüche 1 bis 3, **dadurch gekennzeichnet, dass** R₉ und R₁₀ Wasserstoff sind.

5. Reaktivfarbstoffe gemäss einem der Ansprüche 1 bis 4 der Formel 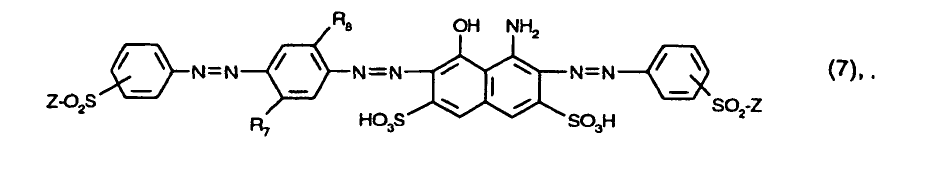 worin
R₇ C₁-C₄-Alkyl, insbesondere Methyl, R₈ durch Hydroxy substituiertes
C₁-C₄-Alkoxy und Z Vinyl, β-Chloräthyl oder β-Sulfatoäthyl ist.

6. Verfahren zur Herstellung von Farbstoffen der Formel (4), **dadurch gekennzeichnet, dass** man zuerst eine Verbindung der Formel 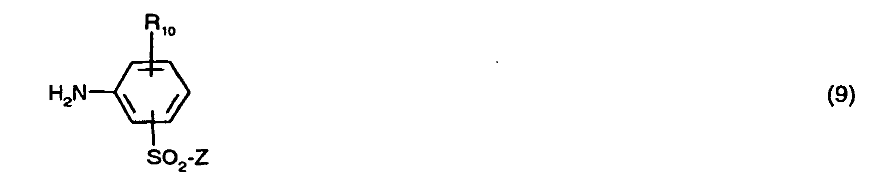 diazotiert und sauer auf eine Verbindung der Formel 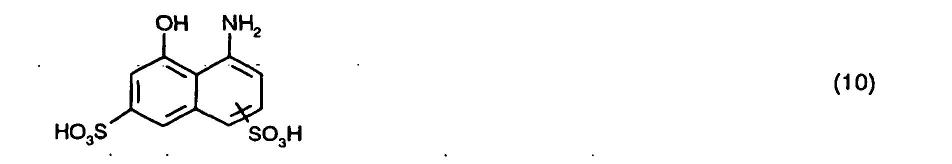 kuppelt, und anschliessend eine Verbindung der Formel 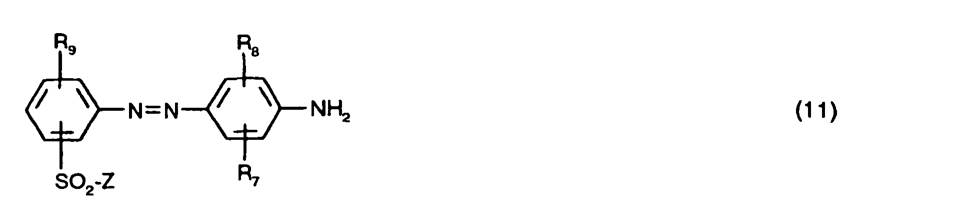 diazotiert und in alkalischem Medium auf die vorher gebildete Monoazoverbindung kuppelt, wobei R₇, R₈, R₉, R₁₀ und Z die in Anspruch 1 angegebenen Bedeutungen haben.

7. Verwendung von Reaktivfarbstoffen der Formel (4) gemäss Anspruch 1 zum Färben und Bedrucken von cellulosehaltigen Fasermaterialien.

8. Zwischenprodukt der Formel 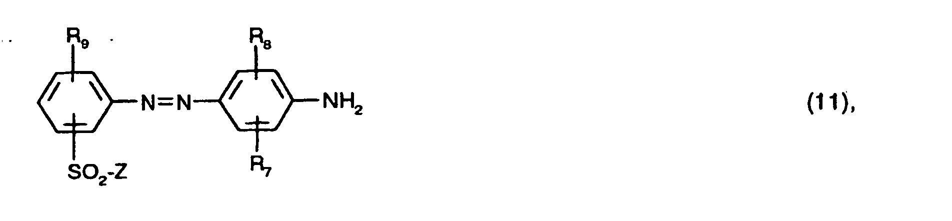 worin
R₇ und R₉ unabhängig voneinander Wasserstoff, C₁-C₄-Alkyl, C₁-C₄-Alkoxy oder Halogen bedeuten,
R₈ durch Hydroxy substituiertes C₁-C₄-Alkoxy und
Z Vinyl, β-Sulfatoäthyl, β-Chloräthyl oder β-Acetoxyäthyl ist.

## Claims

1. Reactive dyes of formula 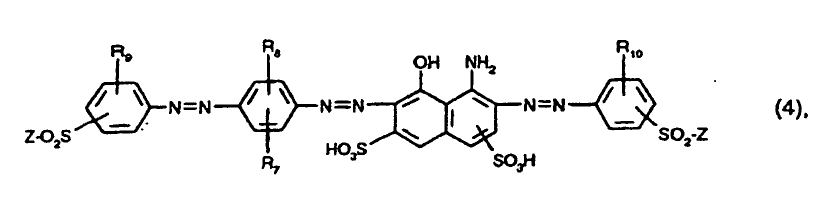 wherein
R₇, R₉ and R₁₀ are each independently of one another hydrogen, C₁-C₄alkyl, C₁-C₄alkoxy or halogen,
R₈ is C₁-C₄alkoxy which is substituted by hydroxyl, and
Z is vinyl, β-sulfatoethyl, β-chloroethyl or β-acetoxyethyl.

2. Reactive dyes according to claim 1, of formula 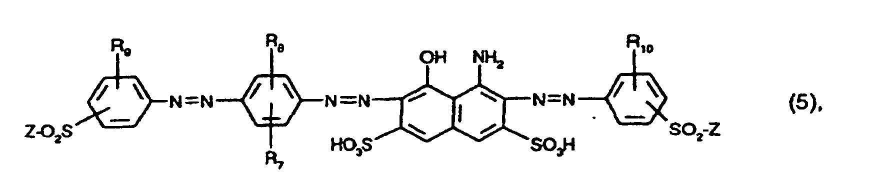 wherein
R₇, R₈, R₉, R₁₀ and Z have the meanings specified in claim 1.

3. Reactive dyes according to either claim 1 or claim 2, of formula 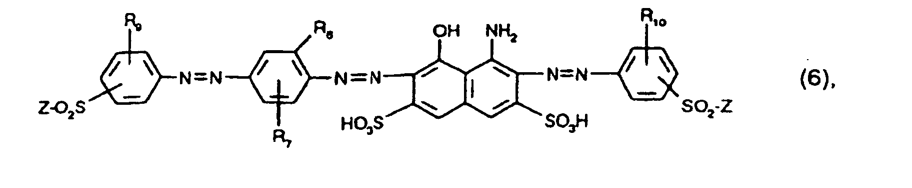 wherein
R₇, R₈, R₉, R₁₀ and Z have the meanings specified in claim 1.

4. Reactive dyes according to any one of claims 1 to 3, wherein R₉ and R₁₀ are hydrogen.

5. Reactive dyes according to any one of claims 1 to 4, of formula 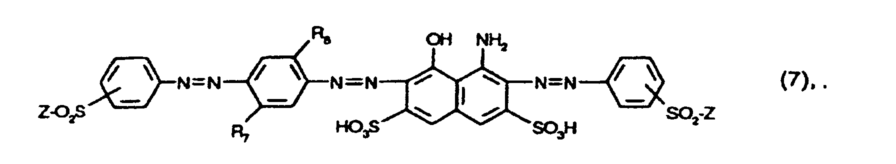 wherein
R₇ is C₁-C₄alkyl, especially methyl, R₈ is C₁-C₄alkoxy which is substituted by hydroxyl, and Z is vinyl, β-chloroethyl or β-sulfatoethyl.

6. A process for preparing dyes of formula (4), which comprises first diazotizing a compound of formula 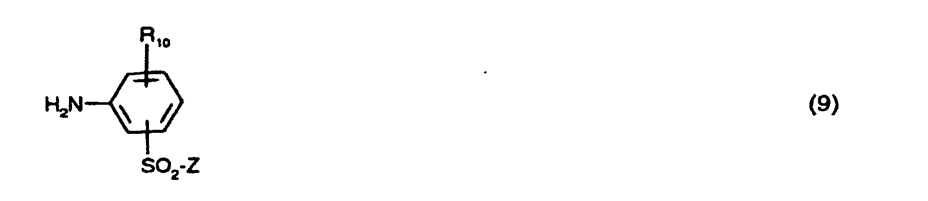 and coupling the product acidically with a compound of formula 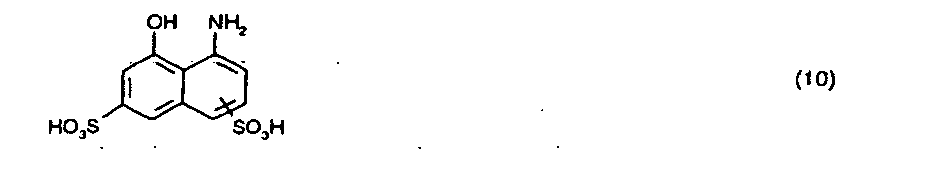 and then diazotizing a compound of formula 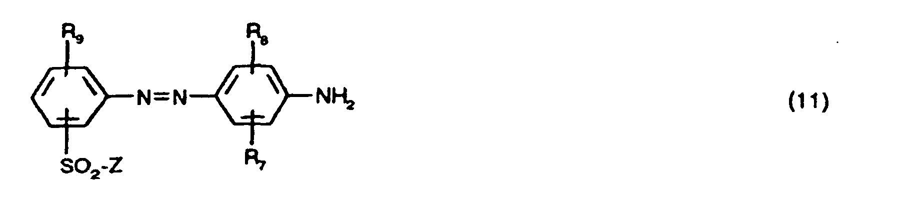 and coupling the product in alkaline medium with the monoazo compound formed beforehand, wherein R₇, R₈, R₉, R₁₀ and Z have the meanings specified in claim 1.

7. Use of reactive dyes of formula (4) according to claim 1 for dyeing and printing cellulosic fibre materials.

8. Intermediate of formula 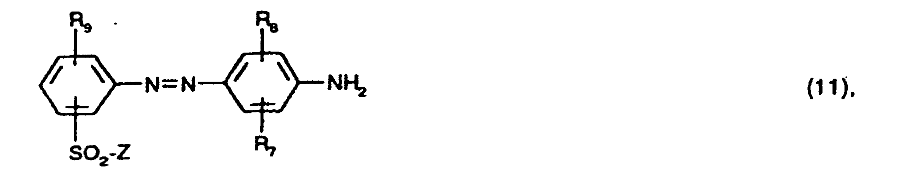 wherein
R₇ and R₉ are each independently of one another hydrogen, C₁-C₄alkyl, C₁-C₄alkoxy or halogen,
R₈ is C₁-C₄alkoxy which is substituted by hydroxyl, and
Z is vinyl, β-sulfatoethyl, β-chloroethyl or β-acetoxyethyl.

## Revendications

1. Colorants réactifs de formule 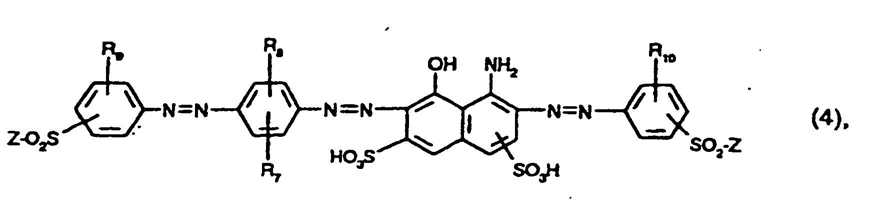 dans laquelle
R₇, R₉ et R₁₀ représentent, indépendamment les uns des autres, un atome d'hydrogène, un groupe alkyle en C₁ à C₄, alcoxy en C₁ à C₄ ou un atome d'halogène,
R₈ représente un groupe alcoxy en C₁ à C₄ substitué par un groupe hydroxy et
Z représente un groupe vinyle, β-sulfatoéthyle, β-chloroéthyle ou β-acétoxyéthyle.

2. Colorants réactifs selon la revendication 1 de formule 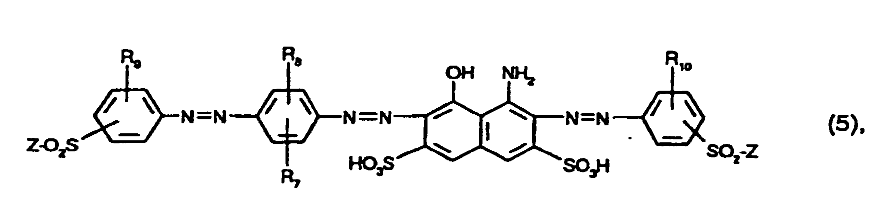 dans laquelle
R₇, R₈, R₉, R₁₀ et Z ont les significations indiquées dans la revendication 1.

3. Colorants réactifs selon l'une des revendications 1 et 2 de formule 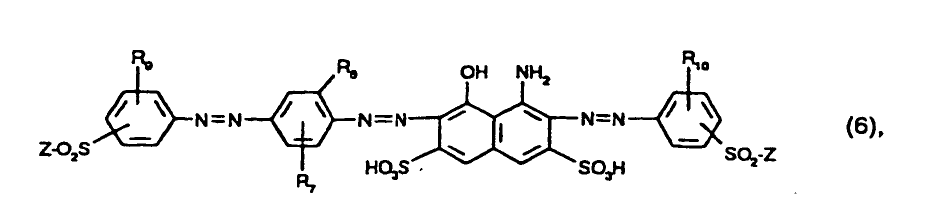 dans laquelle
R₇, R₈, R₉ et R₁₀ et Z ont les significations indiquées dans la revendication 1.

4. Colorants réactifs selon l'une quelconque des revendications 1 à 3, **caractérisés en ce que** R₉ et R₁₀ représentent un atome d'hydrogène.

5. Colorants réactifs selon l'une des revendications 1 à 4 de formule 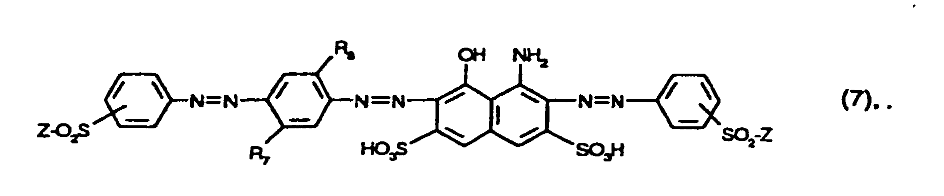 dans laquelle
R₇ représente un groupe alkyle en C₁ à C₄, en particulier un groupe méthyle, R₈ représente un groupe alcoxy en C₁ à C₄ substitué par un groupe hydroxy et Z représente un groupe vinyle, β-chloroéthyle ou β-sulfatoéthyle.

6. Procédé de production de colorants de formule (4), **caractérisé en ce que** l'on diazote d'abord un composé de formule 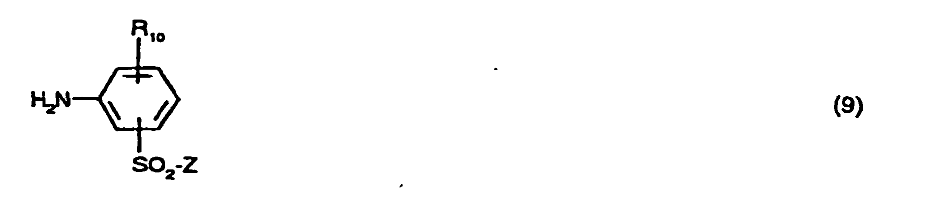 que l'on fait copuler en milieu acide avec un composé de formule 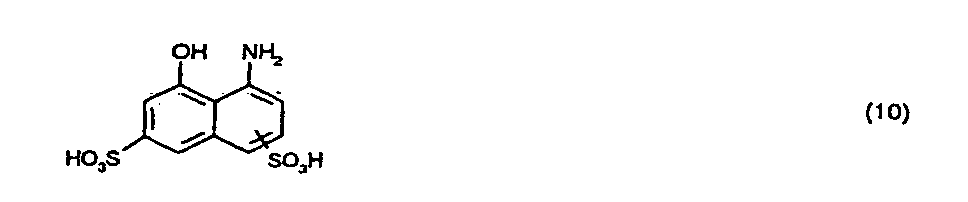 et **en ce que** l'on diazote ensuite un composé de formule 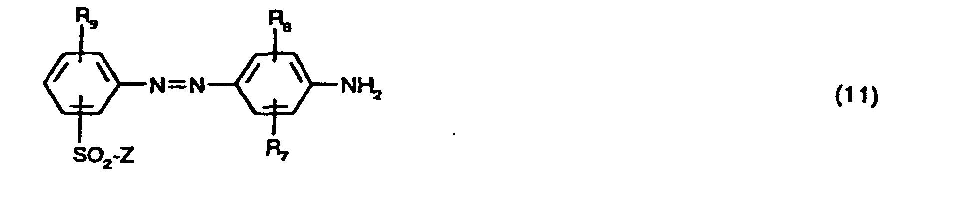 que l'on fait copuler en milieu basique avec le composé monoazoïque formé au préalable, R₇, R₈, R₉, R₁₀ et Z ayant les significations indiquées dans la revendication 1.

7. Utilisation des colorants réactifs de formule (4) selon la revendication 1 pour colorer et imprimer des matières fibreuses contenant de la cellulose.

8. Produit intermédiaire de formule 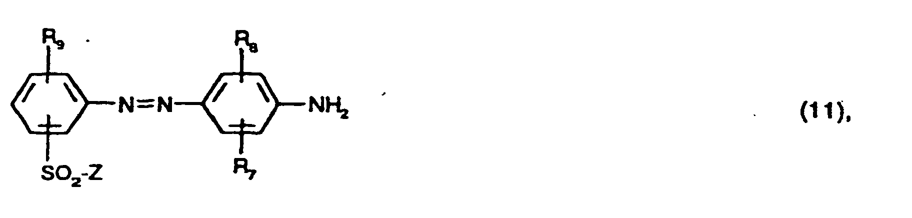 dans laquelle
R₇ et R₉ représentent, indépendamment l'un de l'autre, un atome d'hydrogène, un groupe alkyle en C₁ à C₄, alcoxy en C₁ à C₄ ou un atome d'halogène,
R₈ représente un groupe alcoxy en C₁ à C₄ substitué par un groupe hydroxy et
Z représente un groupe vinyle, β-sulfatoéthyle, β-chloroéthyle ou β-acétoxyéthyle.
